Europäisches Patentamt

European Patent Office

Office européen des brevets

(11) Publication number: **0 032 110**
A2

(12) # EUROPEAN PATENT APPLICATION

(21) Application number: **80850117.5**

(22) Date of filing: **04.08.80**

(51) Int. Cl.³: **A 22 B 5/00**
**A 22 C 9/00**

(30) Priority: **06.12.79 SE 7910052**

(43) Date of publication of application:
**15.07.81 Bulletin 81 28**

(84) Designated Contracting States:
**AT DE FR GB IT NL**

(71) Applicant: **AB SIMRISHAMNS GJUTERI**
**Box 34**
**S-272 01 Simrishamn(SE)**

(72) Inventor: **Gardell, Jan**
**Brohem**
**S-297 03 Huaröd(SE)**

(72) Inventor: **Carlsson, Leif**
**Timotejvägen 2**
**S-291 62 Kristianstad(SE)**

(74) Representative: **Holmqvist, Lars J.H. et al,**
**Lars Holmqvist Patentbyra AB Box 4289**
**S-203 14 Malmö 4(SE)**

(54) A method for electric treatment of a carcass after the slaughter.

(57) A method for electrical treatment of a carcass after the slaughter. The carcass is subjected to a pulsed electric voltage during 1 to 2 min. immediately after the exsanguination. The voltage is a square wave having a pulse frequency of 10 to 15 Hz, a top voltage of about 50 to 85 V and a pulse length of about 5 ms. One terminal is attached to the muzzle of the carcass and the hang rail constitutes the earth terminal. The voltage can be in one direction or the direction can be changed. The treatment can be continuously or intermittently. After the electrical treatment the carcass can be cooled rapidly without the risk of so called cold shortening. Moreover, the tenderness enzymes are released which results in a more tender end product.

EP 0 032 110 A2

Croydon Printing Company Ltd.

1

# A METHOD FOR ELECTRICAL TREATMENT OF A CARCASS AFTER THE SLAUGHTER

The present invention relates to a method for electrical treatment of a carcass immediately after the slaughter. The invention is particularly usable in respect of cattle like cows, bulls, calves and the like.

Normally, the slaughter and the subsequent treatment are performed in the following way. After the stunning and the exanguination, the carcass is dressed and placed in a cooling room for rapid cooling of the carcass to a temperature below $+10^{o}C$. The rapid cooling is performed in order to prevent bacterial growth on the carcass. We have found that if a carcass is cooled too fast the quality of the meat will be poor which probably depends on the so-called cold shortening.

In order to avoid this drawback, electrical stimulation of the carcass with a high voltage up to 3600 V has been used, which makes it possible to cool the carcass rapidly without the risk of cold shortening, which probably depends on the fact that the electric pulses stimulate the carcass to work, whereby energy is consumed. However, it is difficult to use these high voltage devices in a normal environment of a slaughter house, due to the high demands on electric insulation and protection against the high voltage.

The object of the present invention is to provide a method for electrical treatment of the carcass with a low voltage. Thus, the problem with the high voltage is avoided. According to the invention equal or better results are obtained in comparison with previously known technique.

We have found that if the electrical treatment is initiated very quickly after the slaughter, a low voltage can be used. Moreover, the placing of the terminals is of great importance. The electrical treatment according to the present invention is performed very soon after the exsanguination of the carcass, while the nerve pathes are still intact. The active terminal is placed over special nerve centra in the muzzle of the carcass, while the hang rail is connected to earth. When current passes thorugh the carcass, the signals of the brain are imitated and the nerve system is activated. The muzzles of the carcass are contracted and consume the energy stored. Using a low voltage which is delivered in short pulses a short time after the exanguination, the biological function of the nerve system is imitated. It is assumed that such a low voltage can be used, as in the present invention because the nerve system is practically intact and can be used for leading the electric current.

The electrical treatment or stimulation has two purposes, viz. it prevents the cold shortening and it releases the tenderness enzymes of the meat. Because of the electrical stimulation, the carcass can be rapidly cooled without the risk of impairing the quality due to the cold shortening, whereby time and money are saved.

However, the most important result of the electrical stimulation seems to be the release of the tenderness enzymes of the meat. Thus, the enzymes can start their operation at a higher temperature, whereby they are more effective. The result will be a faster tendering and what is more important, a more equal and better quality.

The quality of the meat can be determined by measuring the pH-value of the carcass. At a rapid cooling without electrical treatment, the pH-value does not decrease more than to about pH 6.5. By electrical stimulation, the pH-value can however decrease to pH 5.7 during a time of approximately 1 - 2 hours.

It is also desirable to achieve as low a pH-value as possible, since the bacterial growth is reduced by such a low pH-value.

According to the invention, a method is provided for the treatment of a carcass by electric pulses having relatively low energy, immediately after the exsanguination and before or during the beginning of the cooling. A terminal is attached to the muzzle of the carcass and the hang rail for the carcass constitutes an earth connection.

The electric pulses are voltage pulses having a relatively short duration. The pulses can be directed in the same direction, but preferably a plurality of positive pulses are followed by a plurality of negative pulses and so on.

The voltage can be between 5 V and 100 V. Preferably the top voltage is between 50 V and 85 V, preferably about 80 V, but also a top voltage of 10 V to 50 V has proved to be suitable.

The frequency is not particularly critical but can be varied within wide limits, like 0.1 - 100 Hz. Since the stimulation is performed directly after the exsanguination it is very likely that the nerve system is intact and thus the electric pulses should be designed to give as effective depolarization of the nerve system as possible. Such a physiological type of stimulation would probably consist of very short pulses of some milliseconds duration interspaced with recovery periods long enough for the nerve membrane potential to be reestablished. This gives a minimum recovery time of about 20 ms. However, it can be hypotesized that in order to produce as effective a stimulation as possible, the recovery time should also allow individual muzzle cells to recover completely before the next contraction and thus consume a maximum of available energy which means that the recovery time should be somewhat longer. Experiments have proved that the optimal frequency for stimulation is around 10 to 15 Hz.

However, we have not found any great influence of the frequency, but such a low frequency as 0.1 to 5 Hz, such as 0.5 Hz, has been used as well as a frequency between 1 Hz and 50 Hz. At present, a frequency of 10 to 15 Hz is preferred, such as 14 Hz.

Preferably, the electric pulses consist of square pulses but also other wave forms are usable such as triangular wave, sinus wave or half rectified sinus wave. For the reasons stated above, we prefer at present a square wave having a small duty cycle. The pulse can have a length of 5 ms and a total pulse time of 70 ms, which corresponds to a frequency of 1-.3 Hz. It is also possible to use bursts of pulses or spikes during a short time of e.g. 10 ms and a total pulse time of 100 ms, which corresponds to a frequency of 10 Hz. A top voltage of 80 V, a square pulse length of 5 ms, and a frequency of 14.3 Hz results in an effective rms-voltage of only 5.7 V. The treatment can be performed continuously or intermittently, for example having a treatment time of 1 sec. followed by 2 seconds pause and so on.

The treatment should be started as soon as possible after the exsanguination, if possible 30 minutes at the latest and preferably before 10 minuts after the exsanguination. The treatment time can be varied between 1/2 min. and 5 min., preferably 1 - 2 min. As mentioned above the treatment can be continuously or intermittently.

We have found that the electrical stimulation according to the

4

present invention can be so effective that overstimulation occurs, i.e. rigor onset seems to start already during the dressing. The overstimulation can be eliminated easily by decreasing the top voltage or decreasing the stimulation time.

Due to the low electric energy having a rms voltage in order of 6 V, which is used according to the present invention, the carcass will not twitch during the treatment which is an advantage.

Since the active terminal is placed in the muzzle of the carcass and the hang rail is the earth contact, a fairly good electric connection is achieved and said top voltage of 80 V having a pulse frequence of 14 Hz and a pulse length of 5 ms gives a current in the order of 0.2 A.

The electric curcuits can be constructed in many different ways by a person skilled in the art. The circuit includes a pulse generator having the desired frequency. A time circuit can be set to the desired time for the treatment. Since these circuits are conventional no embodiment is given here. The circuits can be constructed by means of transistors, tyristors and so on.

The device according to the invention can include a control unit including a switch for the start of the stimulation, a monitoring lamp for the switch and an emergency stop switch, and a setting knob for the treatment time. The terminal for the muzzle of the carcass can be made in the form of a tong.

The result of the electric stimulation can be monitored by measuring the pH-value of the carcass and if the measured value is not following the expected pH-curve this is an indication that something is wrong with the carcass, and this carcass is treated separately. For instance the pH-value shall be below pH 6.0.

By the present invention, a low voltage can be used at the electric treatment of the carcass, whereby the risk of electric chocks to the operator handling the device is eliminated. Moreover, the risk of flush over and electric sparks is reduced. The fact that a low voltage can be used is particularly important in a slaughter house, where the objects easily become damp and greasy.

1

## CLAIMS

1. A method for electric treatment of the carcass after the slaughter, characterized in that electric pulses are conducted through the carcass, whereby the pulses have a top voltage of between 10 V and 100 V, preferably 80 V.

2. A method according to claim 1, characterized in that the electric pulses are conducted through the carcass from a muzzle terminal to a hang rail, in which the carcass is hanging and which constitutes the earth terminal.

3. A method according to claim 1 or 2, characterized in that the treatment is performed immediately after the slaughter, 30 min at latest, preferably 10 min. after the exsanguination.

4. A method according to any of the preceding claims, characterized in that the electric pulses are square waves, triangular waves or sinus waves.

5. A method according to any of the preceding claims, characterized in that the electric pulses have a frequency of between 0.1 and 100 Hz, preferably between 10 Hz and 15 Hz.

6. A method according to claim 4 or 5, characterized in that the pulses have a frequency of between 10 Hz and 15 Hz and are square waves having a a duty cycle of 1 to 20 %, preferably about 7 %.

7. A method according to any of the preceding claims, characterized in that the electric pulses consist of a number of positive pulses followed by a number of negative pulses, etc.

8. A method according to any of the preceding claims, characterized in that the electric treatment is performed during a time interval of 1/2 min. to 5 min., preferably about 1 min.

9. A method according to any of the preceding claim, characterized in that the treatment is performed continuously or intermittently.